# EUROPÄISCHE PATENTSCHRIFT

(11) **EP 1 168 858 B1**
(45) Veröffentlichungstag und Bekanntmachung des Hinweises auf die Patenterteilung: **20.12.2006**
(21) Anmeldenummer: 01112386.6
(22) Anmeldetag: 21.05.2001
(51) Int. Cl.: H04Q 3/62, H04Q 3/545

(54) **Verfahren und Vorrichtung zur Konfigurierung einer Telekommunikationsanlage**
Method and apparatus for configuring a telecommunications exchange
Procédé et dispositif de configuration d'un commutateur de télécommunication

(30) Priorität: 20.06.2000 DE 10030120
(43) Veröffentlichungstag der Anmeldung: 02.01.2002
(73) Patentinhaber: SIEMENS AKTIENGESELLSCHAFT, 80333 München (DE)
(72) Erfinder: Karnatz, Hans-Jürgen, 58730 Fröndenberg (DE); Rothard, Björn, 45276 Essen (DE)

(56) Entgegenhaltungen:
- EP-A- 0 557 681
- EP-A- 0 766 486
- EP-A- 0 959 405
- DE-A1- 4 102 751
- US-H- H1 802

## Beschreibung

Aus der Produktschrift "Sonderausgabe telcom report und Siemens Magazin Com: ISDN im Büro - HICOM", Siemens AG, Berlin und München, 1985, insbesondere der Seiten 58 bis 75 ist eine für eine Informationsvermittlung ausgebildete Telekommunikationsanlage bekannt. Eine derartige Telekommunikationsanlage weist eine zentrale - zumindest einen Mikroprozessor und eine Speichereinheit umfassende - Steuereinheit und entsprechende Peripherieeinhieten auf, die innerhalb der Telekommunikationsanlage die geforderten Funktionalitäten zur Verfügung stellen. Die Speichereinheit der zentralen Steuerung dient dabei einer Speicherung von anlagenspezifischen Daten und einer umfangreichen, sogenannten Applikationssoftware, wobei die verschiedenen - einem Benutzer angeboten - Funktionalitäten der Kommunikationsanlage durch den Mikroprozessor unter Zugriff auf die in der Speichereinheit hinterlegte Applikationssoftware und die anlagenspezifischen Daten realisiert werden.

Die Applikationssoftware wird dabei in der Regel in einem bestimmten Bereich der Speichereinheit abgelegt und von dort aus durch den Mikroprozessor ausgeführt. Die anlagenspezifischen Daten werden in einem anderen Speicherbereich der Speichereinheit abgelegt. Dieser anlagenspezifische Datensatz kann beispielsweise aus Parametern bestehen, die landesspezifisch oder konfigurationsspezifisch eine Anpassung der Telekommunikationsanlage an den jeweiligen Nutzerkreis ermöglichen. So können z. B. Worte, Befehle und Zeichen auf einem Display eines Kommunikationsendgerätes in einer bestimmten natürlichen Sprache oder die Besonderheiten eines bestimmten Landes und dessen Telekommunikationssystems abgebildet werden. Weiter kann dieser Datensatz auch Codeanteile im Sinne einer Subroutine oder eines ausführbaren Programmteils enthalten, der dazu dient, bestimmte nur in einem speziellen Land oder nur bei einer speziellen natürlichen Sprache notwendige Funktionen auszuführen.

Im Rahmen des bekannten Leistungsmerkmals "Fernadministration" besteht die Möglichkeit einer Aktualisierung der gespeicherten Applikationssoftware und der gespeicherten anlagenspezifischen Datensätze - im folgenden gemeinsam als Systemsoftware bezeichnet -, wobei während der Aktualisierung der Systemsoftware eine Funktionalität der Telekommunikationsanlage nicht gegeben ist. Da jedoch eine mit der Aktualisierung verbundene Außerbetriebnahme der Telekommunikationsanlage, zumindest für eine längere Zeitspanne, nicht akzeptabel ist, wird die Speichereinheit in zwei Speicherbereiche untergliedert. Ein erster Speicherbereich dient dabei einer Speicherung der aktuell verwendeten Systemsoftware. Durch den zweiten Speicherbereich wird ein weiterer Adreßraum zur Verfügung gestellt, der eine Systemsoftware-Aktualisierung während des Betriebs der Telekommunikationsanlage ermöglicht. Im Rahmen der Fernadministration wird dabei beispielsweise über eine Telefonverbindung ausgehend von einem Servicezentrum eine Verbindung mit der Telekommunikationsanlage eingerichtet und eine neue Version der Systemsoftware an die Telekommunikationsanlage übermittelt und in den zweiten Speicherbereich eingespeichert.

Ist die neue Version der Systemsoftware in den zweiten Speicherbereich vollständig eingespeichert kann die Telekommunikationsanlage in relativ kurzer Zeit auf diese neue Systemsoftware umgestellt werden. Auf diese Weise wird eine längere Unterbrechung des Betriebs der Telekommunikationsanlage vermieden. Der erste Speicherbereich kann daraufhin gelöscht werden und steht für eine Neuinstallation einer weiteren neueren Systemsoftware zur Verfügung. Dies bedeutet, daß der vorhandene Permanentspeicher, zumeist ein Flash-Memory, wesentlich größer (maximal doppelt so groß) ist, wie von der aktuell verwendeten Systemsoftware benötigt. Maximal die Hälfte dieses Permanentspeichers bleibt typischerweise im Normalbetrieb ungenutzt. Auch im Auslieferungszustand, bei dem die neueste Systemsoftware-Version mitgeliefert wird, ist somit bis zu der Hälfte dieses Permanentspeichers bzw. Flash-Memory ungenutzt.

Ein solches Verfahren bzw. eine solche Telekommunikationsanlage ist schon aus EP-A-0 959 405 bekannt.

Als Problem erweist sich mit einer zunehmenden Anzahl von zu berücksichtigenden Ländern bzw. von damit verbundenen konfigurationsspezifischen oder kundenspezifischen Daten, der für diese Datensätze benötigte Speicherplatz. Nach dem Stand der Technik werden Datensätze für alle zu berücksichtigenden Gegebenheiten vorgeleistet, wobei für diese zusätzlichen Datensätze ein weiteren Bereich in der Speichereinheit reserviert wird. Da Telekommunikationsanlagen in sehr viele Länder exportiert und verkauft werden und relativ starke Anpassungen an örtliche Gegebenheiten nötig sind, steigt der benötigte Speicherbedarf somit schnell an.

Der vorliegenden Erfindung liegt die Aufgabe zugrunde, ein Verfahren und eine Vorrichtung zur Verfügung zu stellen, mit dem zusätzliche anlagenspezifische Datensätze ohne Vergrößerung der Speicherkapazität einer Kommunikationsanlage zur Verfügung gestellt werden können.

Diese Aufgabe wird mit dem Verfahren und der Vorrichtung der unabhängigen Patentansprüche 1 und 7 gelöst. Vorteilhafte Ausgestaltungen ergeben sich aus den Unteransprüchen.

Gemäß dem erfindungsgemäßen Verfahren des Patentanspruchs 1 werden vorteilhaft bei einer Telekommunikationsanlage, die mit einer zumindest einen anlagenspezifischen Datensatz umfassenden Systemsoftware ausgestattet ist, wobei die laufende Systemsoftware in einem ersten Speicherbereich gespeichert ist und bei der ein zweiter, im Normalbetrieb nicht genutzter Speicherbereich vorhanden ist, in den bei einer Software-Aktualisierung eine neue Version der Systemsoftware installiert wird, einer oder mehrere Datensätze in diesen zweiten Speicherbereich abgespeichert. Diese Datensätze enthalten für mehrere mögliche Länder und natürliche Sprachen die jeweils benötigten Daten. Nach einer Inbetriebnahme der Telekommunikationsanlage wird aus diesem zweiten Speicherbereich der oder die konkret benötigten anlagenspezifischen Datensätze für das Land oder die natürliche Sprache, für das die Telekommunikationsanlage konfiguriert werden soll, in den ersten Speicherbereich kopiert und stehen somit im folgenden im Normalbetrieb der Telekommunikationsanlage zur Verfügung.

Vorteilhaft enthält nach Anspruch 2 die Systemsoftware in dem ersten Speicherbereich bei der Erstinstallationen bereits einen Satz von Default-Daten, der bei der Konfiguration gemäß dem ausgewählten Land oder der ausgewählten Sprache bzw. Konfiguration mit einem oder mehreren Datensätzen aus dem zweiten Speicherbereich überschrieben wird. Dadurch wird vorteilhaft ein Betrieb der Telekommunikationsanlage in jedem Fall ermöglicht, wenn auch mit eingeschränkten Funktionen und nicht im vollen Umfang.

Vorteilhaft steht der Speicherbereich, der bisher die Datensätze für alle denkbaren Konfigurationen der Telekommunikationsanlage aufnehmen mußte, nun allein für eine bestimmte Konfiguration der Telekommunikationsanlage zur Verfügung. Ebenfalls vorteilhaft werden im Auslieferungszustand für eine Vielzahl von Konfigurationen in dem zweiten, bei der Auslieferung normal freien Speicherbereich Datensätze abgelegt.

Nach Anspruch 3 kann vorteilhaft durch die Eingabe eines Kennworts der oder die anlagenspezifischen Datensätze aus dem zweiten Speicherbereich anhand einer Liste ausgewählt werden und diese anlagenspezifischen Datensätze in den ersten Speicherbereich kopiert werden. Dies führt zu einer komfortablen Konfiguration der Telekommunikationsanlage.

Schließlich kann vorteilhaft der zweite Speicherbereich nach dem Kopieren der benötigten anlagenspezifischen Datensätze in den ersten Speicherbereich für eine eventuelle spätere Software-Aktualisierung gelöscht werden.

Nach dem unabhängigen Anspruch 7 weist eine Telekommunikationsanlage eine zumindest einen anlagenspezifischen Datensatz umfassende Systemsoftware auf, wobei die Telekommunikationsanlage einen ersten Speicherbereich zur Speicherung der laufenden Systemsoftware und der anlagenspezifischen Datensätze und einen zweiten Speicherbereich umfaßt, der im Normalbetrieb nicht genutzt wird und in den bei einer Software-Aktualisierung eine neuere Version der Systemsoftware installierbar ist. Vorteilhaft sind Datensätze für mehrere mögliche Länder und natürliche Sprachen im zweiten Speicherbereich gespeichert wobei die benötigten anlagenspezifischen Datensätze können aus diesem zweiten Speicherbereich in den ersten Speicherbereich kopiert werden und somit im Normalbetrieb der Telekommunikationsanlage zur Verfügung stehen.

Vorteilhaft ist nach Anspruch 8 im ersten Speicherbereich zumindest ein Satz von Default-Daten der anlagenspezifischen Datensätze gespeichert. Dadurch wird ein Betrieb der Telekommunikationsanlage in jedem Fall ermöglicht, wenn auch mit eingeschränkten Funktionen und nicht im vollen Umfang, soweit ein Kopieren der benötigten anlagenspezifischen Datensätze aus dem zweiten Speicherbereich scheitern sollte.

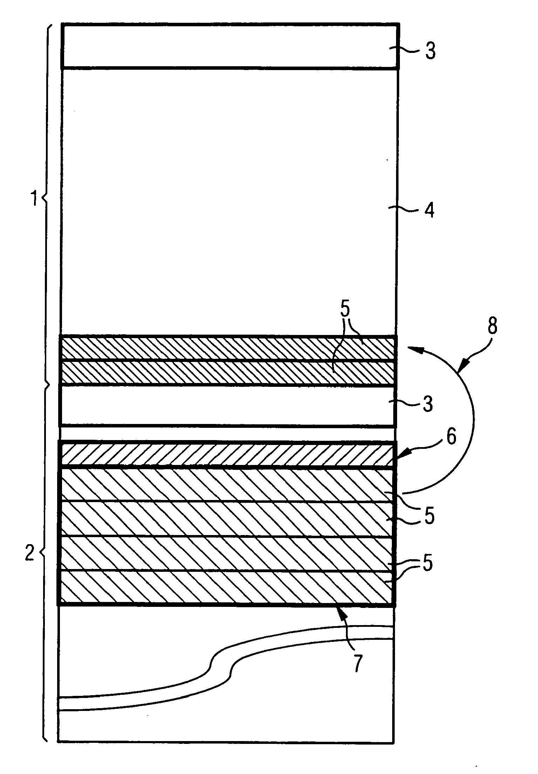

Anhand der Figur wird nachfolgend ein Ausführungsbeispiel einer erfindungsgemäßen Telekommunikationsanlage und des erfindungsgemäßen Verfahrens näher erläutert.

Die Figur zeigt in einer schematischen Zeichnung die Speicherbelegung einer landes- und konfigurationsbezogen konfigurierbaren Telekommunikationsanlage im Auslieferungszustand, bei der das erfindungsgemäße Verfahren anwendbar ist. Die dargestellte Speichereinheit der Telekommunikationsanlage ist untergliedert in einen ersten Speicherbereich 1 und einen zweiten Speicherbereich 2, die jeweils als geschweifte Klammer am Rand des den Speicher darstellenden Rechtecks in ihrem Bereich abgegrenzt werden.

Der erste Speicherbereich 1 weist einen Bereich für eine Laderoutine 3 auf, an diesen schließt sich ein Bereich für eine aktuell laufende Applikationssoftwar 4 an und schließlich der Bereich für landes- und konfigurationsspezifischen Datensätze 5.

Der zweite Speicherbereich 2 weist zunächst einen bestimmten Adreßraum für eine Ladetabelle 6 auf und daran anschließend mehrere landes- und konfigurationsspezifische Datensätze 5, die als eine Datensatzsammlung 7 in einem Bereich des zweiten Speicherbereichs 2 zusammengefaßt sind.

Wenn nun die Applikationssoftware 4 bei der Installation der Telekommunikationsanlage installiert ist und in Betrieb genommen werden soll, so können durch Eingabe eines entsprechenden Kennwortes in der Ladetabelle 6 der, oder die entsprechenden landes- und konfigurationsspezifischen Datensätze 5, die sich in der Datensatzsammlung 7 befinden, ausgewählt werden und anstelle der Datensätze 5, die als Default-Datensätze im ersten Speicherbereich 1 eingetragen sind, in den ersten Speicherbereich 1 geschrieben werden. Der Vorgang des Kopierens aus dem zweiten Speicherbereich 2 in den ersten Speicherbereich 1 ist hier in der Schemazeichnung durch einen Pfeil für die Kopierrichtung 8 angedeutet. In dem ersten Speicherbereich 1 befinden sich nach diesem Vorgang nun einer oder mehrere anlagenspezifische Datensätze 5, die jedoch nicht mehr ein Minimalpaket darstellen, sondern genau die benötigten anwendungsspezifischen Parameter und Softwareteile zur Verfügung stellen.

Vorteilhaft steht zur Bereitstellung landes- und konfigurationsspezifischer Datensätze 5 in dem zweiten Speicherbereich 2 nun fast dessen gesamter Speicherplatz zur Verfügung. Er wird nur beschränkt durch die Ladetabelle 6 und eine auch im zweiten Speicherbereich vorhandenen Laderoutine 3.

Nach der Installation der Applikationssoftware 4 und dem Kopieren der Datensätze 5 aus dem zweiten Speicherbereich 2 in den ersten Speicherbereich 1 kann der zweite Speicherbereich 2 größtenteils bis auf die Laderoutine 3 gelöscht werden. Er steht somit anschließend für eine Software-Aktualisierung wie bisher zur Verfügung.

Soweit bei der Software-Aktualisierung keine Ergänzung der spezifischen Datensätze 5 notwendig ist, können die nun vorhandenen weiter verwendet werden oder es wird nachdem die Software-Aktualisierung durchgeführt wurde, in dem dann nicht mehr konkret zum Betrieb notwendigen ersten Speicherbereich 1 eine entsprechende Tabelle von Systemkomponenten per Fernadministration ebenfalls nachgeladen und der Vorgang nun mit Bezug auf den zweiten Speicherbereich erneut durchgeführt.

## Patentansprüche

1. Verfahren zur Konfigurierung einer Telekommunikationsanlage,
bei dem eine Speichereinheit der Telekommunikationsanlage einen ersten und einen zweiten Speicherbereich (1; 2) aufweist, wobei in dem ersten Speicherbereich (1) eine aktuell ablauffähige Systemsoftware (4) gespeichert wird und ein zweiter, im Normalbetrieb nicht genutzter Speicherbereich (2) einer Systemsoftware-Aktualisierung dient,
**dadurch gekennzeichnet,**
**daß** für mehrere Länder und/oder natürliche Sprachen benötigte Daten in einen oder mehrere Datensätze (5) des zweiten Speicherbereiches (2) eingeschrieben werden und durch die Telekommunikationsanlage benötigte anlagenspezifische Datensätze (5) aus dem zweiten Speicherbereich (2) ausgewählt und in den ersten Speicherbereich (1) kopiert werden.

2. Verfahren zur Konfigurierung einer Telekommunikationsanlage nach Anspruch 1,
**dadurch gekennzeichnet,**
**daß** die benötigten anlagenspezifischen Datensätze (5) im ersten Speicherbereich (1) zumindest einen Satz von Default-Daten der Systemsoftware (4) überschreiben.

3. Verfahren zur Konfigurierung einer Telekommunikationsanlage nach einem der vorhergehenden Ansprüche,
**dadurch gekennzeichnet,**
**daß** anhand eines Kennworts die benötigten anlagenspezifischen Datensätze (5) aus einer Ladetabelle (6) ausgewählt und in den ersten Speicherbereich (1) geschrieben werden.

4. Verfahren zur Konfigurierung einer Telekommunikationsanlage nach einem der vorhergehenden Ansprüche,
**dadurch gekennzeichnet,**
**daß** der zweite Speicherbereich (2) gelöscht wird, nachdem die benötigten anlagenspezifischen Datensätze (5) in den ersten Speicherbereich (1) kopiert wurden, um den zweiten Speicherbereich (2) für eine nachfolgende Software-Aktualisierung freizugeben.

5. Verfahren zur Konfigurierung einer Telekommunikationsanlage nach einem der vorhergehenden Ansprüche,
**dadurch gekennzeichnet,**
**daß** die anlagenspezifischen Datensätze (5) landes- und konfigurationsbezogene Daten umfassen.

6. Verfahren zur Konfigurierung einer Telekommunikationsanlage nach einem der vorhergehenden Ansprüche,
**dadurch gekennzeichnet,**
**daß** ein Kopieren der benötigten anlagenspezifischen Datensätze (5) in den ersten Speicherbereich (1) bei der Inbetriebnahme der Telekommunikationsanlage erfolgt.

7. Telekommunikationsanlage,
mit einer einen ersten und einen zweiten Speicherbereich (1; 2) umfassenden Speichereinheit, wobei in dem ersten Speicherbereich (1) eine aktuell ablauffähige Systemsoftware (4) gespeichert ist und der zweite, im Normalbetrieb nicht genutzte Speicherbereich (2) einer Systemsoftware-Aktualisierung dient,
**dadurch gekennzeichnet,**
**daß** für mehrere Länder und/oder natürliche Sprachen benötigte Daten in einen oder mehrere Datensätze (5) des zweiten Speicherbereiches (2) gespeichert sind und von der Telekommunikationsanlage benötigten anlagenspezifische Datensätze (5) aus dem zweiten Speicherbereich (2)in den ersten Speicherbereich (1) kopierbar sind.

8. Telekommunikationsanlage nach Anspruch 7,
**dadurch gekennzeichnet,**
**daß** im ersten Speicherbereich (1) zumindest ein Satz von Default-Daten der Systemsoftware (4) gespeichert ist.

9. Telekommunikationsanlage nach Anspruch 7 oder 8,
**dadurch gekennzeichnet,**
**daß** in einer Ladetabelle (6) die anlagenspezifischen Datensätze (5) je einem Kennwort zugeordnet sind.

## Claims

1. A method for configuring a telecommunications switching system,
wherein a memory unit of the telecommunications switching system has a first and a second storage area (1; 2), with currently operating system software (4) being stored in the first storage area (1) and a second storage area (2), not used in normal operation, serving for a system software update,
**characterised in that**
data required for a number of countries and/or natural languages is written into one or more data records (5) of the second storage area (2) and system-specific data records (5) required by the telecommunications switching system are selected from the second storage area (2) and copied into the first storage area (1).

2. The method for configuring a telecommunications switching system as claimed in claim 1,
**characterised in that**
the required system-specific data records (5) overwrite at least one default data record of the system software (4) in the first storage area (1).

3. The method for configuring a telecommunications switching system as claimed in one of the preceding claims,
**characterised in that**
the required system-specific data records (5) are selected from a load table (6) using a keyword and written into the first storage area (1).

4. The method for configuring a telecommunications switching system as claimed in one of the preceding claims,
**characterised in that**
the second storage area (2) is cleared, after the required system-specific data records (5) have been copied into the first storage area (1), to release the second storage area (2) for a subsequent software update.

5. The method for configuring a telecommunications switching system as claimed in one of the preceding claims,
**characterised in that**
the system-specific data records (5) comprise country and configuration-related data.

6. The method for configuring a telecommunications switching system as claimed in one of the preceding claims,
**characterised in that**
the required system-specific data records (5) are copied into the first storage area (1) when the telecommunications switching system is brought into service.

7. A telecommunications switching system,
with a memory unit comprising a first and a second storage area (1; 2), with currently operating system software (4) being stored in the first storage area (1) and the second storage area (2), not used in normal operation, serving for a system software update,
**characterised in that**
data required for a number of countries and/or natural languages is stored in one or more data records (5) of the second storage area (2) and system-specific data records (5) required by the telecommunications switching system can be copied from the second storage area (2) into the first storage area (1).

8. The telecommunications switching system as claimed in claim 7,
**characterised in that**
at least default data record of the system software (4) is stored in the first storage area (1).

9. The telecommunications switching system as claimed in claim 7 or 8,
**characterised in that**
each of the system-specific data records (5) is assigned to a keyword in the load table (6).

## Revendications

1. Procédé de configuration d'un central de télécommunication,
dans lequel une unité de mémoire du central de télécommunication présente une première et une deuxième zones de mémoire (1 ; 2), un logiciel système (4) exécutable momentanément étant mémorisé dans la première zone de mémoire (1) et une deuxième zone de mémoire (2) non utilisée en service normal servant à une mise à jour du logiciel système, **caractérisé en ce**
**que** des données nécessaires pour plusieurs pays et/ou langues naturelles sont inscrites dans un ou dans plusieurs enregistrements de données (5) de la deuxième zone de mémoire (2) et en ce que des enregistrements de données spécifiques au central et nécessaires au central de télécommunication sont sélectionnés à partir de la deuxième zone de mémoire (2) et sont copiés dans la première zone de mémoire (1).

2. Procédé de configuration d'un central de télécommunication selon la revendication 1,
**caractérisé en ce**
**que** les enregistrements de données (5) nécessaires et spécifiques au central, disponibles dans la première zone de mémoire (1) écrasent au moins un enregistrement de données par défaut du logiciel système (4).

3. Procédé de configuration d'un central de télécommunication selon l'une quelconque des revendications précédentes,
**caractérisé en ce**
**que** les enregistrements de données (5) nécessaires et spécifiques au central sont sélectionnés à partir d'une table de téléchargement (6) à l'aide d'un mot de passe et sont écrits dans la première zone de mémoire (1).

4. Procédé de configuration d'un central de télécommunication selon l'une quelconque des revendications précédentes, **caractérisé en ce**
**que** la deuxième zone de mémoire (2) est supprimée après que les enregistrements de données (5) nécessaires et spécifiques au central aient été copiés dans la première zone de mémoire (1) afin de libérer la deuxième zone de mémoire (2) pour une mise à jour suivante du logiciel.

5. Procédé de configuration d'un central de télécommunication selon l'une quelconque des revendications précédentes,
**caractérisé en ce**
**que** les enregistrements de données (5) spécifiques au central comprennent des données relatives au pays et à la configuration.

6. Procédé de configuration d'un central de télécommunication selon l'une quelconque des revendications précédentes,
**caractérisé en ce**
**qu'**une copie des enregistrements de données (5) nécessaires et spécifiques au central est réalisée dans la première zone de mémoire (1) lors de la mise en service du central de télécommunication.

7. Central de télécommunication,
doté d'une unité de mémoire comprenant une première et une deuxième zones de mémoire (1 ; 2), un logiciel système (4) exécutable momentanément étant mémorisé dans la première zone de mémoire (1) et la deuxième zone de mémoire (2) non utilisée en service normal servant à une mise à jour du logiciel système,
**caractérisé en ce**
**que** des données nécessaires pour plusieurs pays et/ou langues naturelles sont inscrites dans un ou dans plusieurs enregistrements de données (5) de la deuxième zone de mémoire (2) et en ce que des enregistrements de données (5) nécessaires et spécifiques au central de télécommunication peuvent être copiés à partir de la deuxième zone de mémoire (2) dans la première zone de mémoire (1).

8. Central de télécommunication selon la revendication 7,
**caractérisé en ce**
**qu'**au moins un enregistrement de données par défaut du logiciel système (4) est mémorisé dans la première zone de mémoire (1).

9. Central de télécommunication selon la revendication 7 ou 8,
**caractérisé en ce**
**que**, dans une table de téléchargement (6), les enregistrements de données (5) spécifiques au central sont affectés à respectivement un mot de passe.
